# EUROPEAN PATENT SPECIFICATION

(11) **EP 2 218 698 B1**
(45) Date of publication and mention of the grant of the patent: **08.08.2012**
(21) Application number: 08869432.8
(22) Date of filing: 16.12.2008
(51) Int. Cl.: C03C 27/12, B32B 17/10, B60J 1/00

(54) **LAMINATED GLASS WITH INSERTED PLASTIC FILM**
VERBUNDGLAS MIT EINGESETZTEM KUNSTSTOFFFILM
VERRE STRATIFIÉ POURVU D'UN FILM DE PLASTIQUE INSÉRÉ

(30) Priority: 09.01.2008 JP 2008002189
(43) Date of publication of application: 18.08.2010
(73) Proprietor: Central Glass Company, Limited, Yamaguchi 755-0001 (JP)
(72) Inventor: YONEKURA, Masaaki, Mie 515-0001 (JP); NAKAMURA, Isao, Mie 515-0001 (JP); IZUTANI, Kensuke, Mie 515-0001 (JP); TAKAMATSU, Atsushi, Mie 515-0001 (JP)
(74) Representative: Manitz, Finsterwald & Partner GbR
(86) International application number: PCT/JP2008/072860
(87) International publication number: WO 2009/087869

(56) References cited:
- JP-A- 6 034 983
- JP-A- 60 225 747
- JP-A- 2000 247 691
- US-A1- 2002 094 407

## Description

The present invention relates in general to a laminated glass comprising a glass plate, an interlayer, a transparent plastic film, another interlayer and another glass plate which are laminated together in this order, and more particularly to the laminated glass for use as an automotive window glass.

A laminated glass comprising two interlayers having a plastic film, particularly, a Polyethylene Terephthalate film interposed therebetween and two glass plates having the two interlayers interposed therebetween is known as a laminated glass that has a heat ray reflecting function.

Usually, for producing a laminated glass, an autoclave is used for effecting a high temperature high pressure treatment through which a glass plate and a Polyester film are thematically bonded to each other by an interlayer.

In Patent Document 1, there is disclosed a laminated glass that comprises a flexible laminated sheet produced by putting between two interlayers a heat ray reflecting plastic film of Polyester, and two glass plates putting therebetween the flexible laminated sheet.

When a plastic film is put between two curved glass plates, it tends to occur that the plastic film has wrinkles. For eliminating this drawback, Patent Document 2 discloses a method in which cuts are formed at a peripheral portion of a plastic film.
Patent Document 1 : Japanese Laid-open Patent Application (Tokkaisho) 56-32352
Patent Document 2 : Japanese Laid-open Patent Application (Tokkaihei) 6-18856

US 2002/0094407 A1 discloses a method for manufacturing a laminated glazing unit comprising at least two glass substrates assembled by an intermediate film comprising at least one ply based on a polymer or polymers provided on at least one of its faces with a functional thin layer or stack of functional thin layers.

JP 2000-247,691 A is directed to a laminated glass, which comprises two curved panes, two polyvinyl butyral layers, a polyethylene terepthtalate film having a thickness of for example between 25 and 50 µm and a transparent thermal insulation layer made of two layers of metallic silver each sandwiched between dielectric layers.

A laminated glass used for an automotive window glass, particularly, for a front window glass (or windshield) has a size with sides of about 1m to 2m long. Thus, if the method disclosed by Patent Document 2 is practically applied to such front window glass, increasing the size of the cuts induces a poor appearance of the window glass and reducing the size of the cuts induces a difficulty in removing wrinkles from the plastic film.

Accordingly, the present invention aims to provide a plastic film-inserted laminated glass (or laminated glass with inserted plastic film) that has a plastic film inserted between two interlayers and has such a feature that the plastic film is free of wrinkles and appearance failure.

The first feature of the present invention is that in a plastic film-inserted laminated glass comprising an outdoor side glass plate, an interlayer, a plastic film, another interlayer and an indoor side glass plate which are laminated in this order, the glass plates have a curved shape formed by bending, the plastic film includes an infrared reflecting film formed thereon and at least at one side of the laminated glass, an edge of the plastic film is placed apart from corresponding edges of the glass plates by a distance ranging from 5mm to 200m in a direction toward a central portion of the glass plates, wherein an angle of a cut surface provided at a peripheral edge of the plastic film relative to a surface of the plastic film is in the range from 30 degrees to 60 degrees.

The second feature of the present invention is that in the plastic film-inserted laminated glass having the above-mentioned first feature, the plastic film has a thickness in the range from 50µm to 200µm.

The third feature of the present invention is that in the plastic film-inserted laminated glass having the above-mentioned first feature or second feature, the plastic film includes an infrared reflecting film constructed of dielectric multiple layers or metal layers.

The fourth feature of the present invention is that in the plastic film-inserted laminated glass having the above-mentioned first, second or third feature, the plastic film is cut out to have a shape similar to the shape of the glass plates or the shape of the edge of a colored film.

The fifth feature of the present invention is that in the plastic film-inserted laminated glass having the above-mentioned first, second, third, fourth or fifth feature, a colored film is formed along a peripheral portion of the outdoor side glass plate like a strip.

The sixth feature of the present invention is that in the plastic film-inserted laminated glass having the above-mentioned first, second, third, fourth, fifth or sixth feature, the edges of the plastic film near corner portions of the glass plates are put on edges of the glass plates.

The seventh feature of the present invention is that in the plastic film-inserted laminated glass having the above-mentioned first, second, third, fourth, fifth, sixth or seventh feature, the plastic film is provided with a mark for the purpose of positioning of the film.

In the field of laminated glass produced by putting a plastic film between two interlayers, it is possible to provide a plastic film-inserted laminated glass that is free of wrinkles of the plastic film and can be put into practical use.

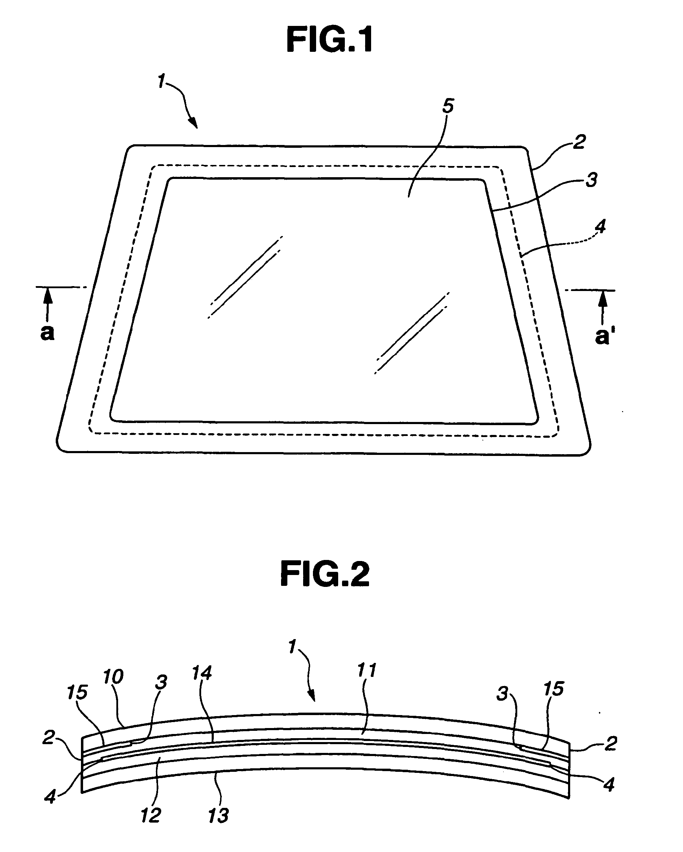

As is seen from Figs. 1 and 2, a plastic film-inserted laminated glass according to the present invention has such a construction that edges 4 of a plastic film to be inserted are located between edges 2 of the plastic film-inserted laminated glass and edges 3 of a colored film.

For an outdoor side glass plate 10 and an indoor side glass plate 13, it is preferable to use a curved glass plate that is produced by bending a soda lime glass obtained through a low cost float process.

For bending or curving the glass plate, the glass plate obtained through the float process is heated to a level higher than a softening point and then subjected to own weight bending process or press-used bending process to have a desired curved shape.

For interlayers 11 and 12, it is preferable to use a hot melt type adhesive such as Poly Vinyl Butyral (PVB), Ethylene Vinyl Acetate (EVA) or the like.

For a plastic film 14, it is preferable to use a film produced through stretching process. The film may be selected from plastic films made of Polyethylene Terephthalate, Polyethylene Naphthalate, Polycarbonate, Polymethyl Methacrylate, Polyethersulfone, Nylon, Polyarylate, Cycloolefin Polymers and the like.

Particularly, Crystalline Polyethylene Terephthalate film (PET film) produced through X,Y axes stretching process has a high heat resistance and thus the film is usable in a wide range temperature circumstance. Furthermore, since the film has a high transparency and is mass produced, the quality of the film is stabilized, and thus usage of the film is suitable for the above-mentioned plastic film.

If the thickness of the plastic film 14 is smaller than 50µm, it tends to occur that the film is deformed and wrinkles are produced. Furthermore, it is difficult to handle the film. Furthermore, when an infrared reflecting film is formed on the film, undesired circling tends to occur due to a stress possessed by the infrared reflecting film. While, if the thickness of the film is greater than 200µm, an appearance failure tends to occur due to a poor deaeration inevitably induced at the time of the joining process. Thus, it is preferable that the film has a thickness ranging from 50µm to 200µm.

The plastic film 14 exhibits excessive flexibility at a high temperature. Thus, when, in the process of producing a laminated glass with the plastic film sandwiched between the interlayers 11 and 12, a thermal bonding of the film is carried out by the interlayers 11 and 12 under a high temperature and high pressure circumstance prepared by an autoclave, the plastic film 14 is subjected to expansion and contraction phenomena to have a curved shape substantially the same as that of the outdoor side glass plate 10. However, if, in this case, the radius of curvature of the outdoor side glass plate 10 is relatively small, it tends to occur that undesired wrinkles are produced on the plastic film around a peripheral portion of the plastic film-inserted laminated glass.

Accordingly, as is shown in Figs. 1 and 2, it is preferable not to fit the edges 4 of the plastic film to the edges 2 of the plastic film-inserted laminated glass, that is, more specifically, it is preferable that, for avoiding appearance of the wrinkles by placing the edges 4 of the plastic film on a glass surface, the plastic film 14 has an area smaller than that of the plastic film-inserted laminated glass 1.

Accordingly, it is preferable to put a plastic film of an area smaller than that of a glass plate in the plastic film-inserted laminated glass in such a manner that a distance d1 from each edge 2 of the plastic film-inserted glass to the corresponding edge 4 of the plastic film is greater than or equal to 5mm.

If sunlight impinges on the edges 4 of the plastic film, scattering of light occurs by the edges 4 of the plastic film. Such light scattering not only causes the edges 4 of the plastic film to be undesirably conspicuous but also disturbs a safety driving of the vehicle. Accordingly, it is desirable to provide the mating surface of the outdoor side glass plate 10 with a colored film 15 for the purpose of protecting the edges 4 of the plastic film from the sunlight.

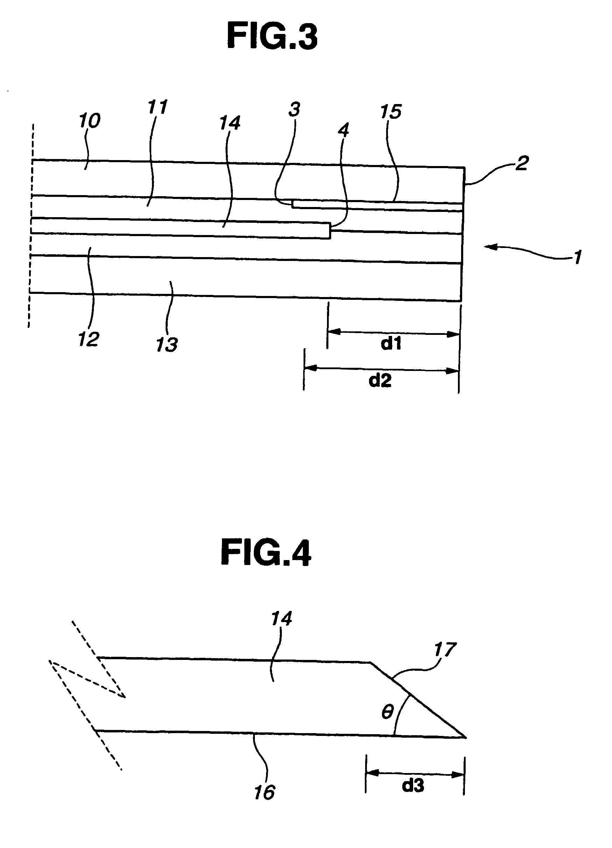

That is, as is seen from Fig. 3, it is preferable to make a distance d1 from an edge of the plastic film-inserted laminated glass to an edge 4 of the plastic film smaller than a distance d2 from the edge of the plastic film-inserted laminated glass to an edge 3 of the colored film.

Since the edges of the plastic film are put between the interlayer 11 and the other interlayer 12, the edges can exhibit a high resistance against a deterioration by moisture as compared with a structure in which the edges of the plastic film are exposed to the moisture like the edges of the plastic film-inserted laminated glass.

Furthermore, as is seen from Fig. 4, because a cut surface of the plastic film forms according to the invention not a right-angle surface, but an inclined surface 17 whose angle ranges from 30 degrees to 60 degrees, each edge 4 of the plastic film is sufficiently covered the two interlayers 11 and 12 and thus air bubbles remaining near the edge 4 of the plastic film are reduced thereby to increase the durability. If the angle θ is smaller than 30 degrees, cutting the plastic film is difficult and if the angle is greater than 60 degrees, advantageous effect by the inclined surface disappears.

When the edge of the plastic film 14 forms the inclined surface 17, the width d3 of the edge of the plastic film as viewed in a direction perpendicular to a plastic film surface 16 is not 0 (zero). In this case, since the thickness of the plastic film is smaller than or equal to 200µm, the width d3 of the edge shows 0.4mm (= 200µm/tan (30)) at the maximum, and thus, when the edges 4 of the plastic film are placed to their given positions, the width d3 of the edges can be treated as a tolerance.

For producing the colored film, the following production steps are preferable. That is, before subjecting the outdoor side glass plate 10 to the bending process, a peripheral portion of the glass plate is applied with a ceramic paste by a screen printing and the ceramic paste is subjected to a baking (or firing) at the time when the glass plate is being bent. Any color is usable if the color is not transparent. Black is the best because existence of the black colored film is not conspicuous.

Since the plastic film 14 is smaller in size than the plastic film-inserted laminated glass, it is difficult to place the edges 4 of the plastic film to given positions.

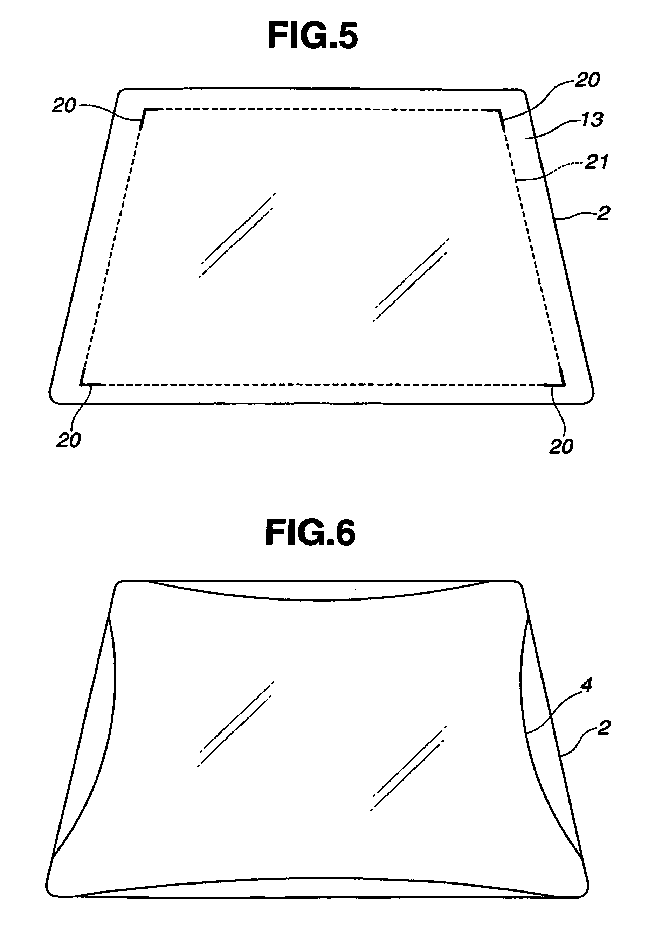

Accordingly, as is seen from Fig. 5, it is desirable to provide the indoor side glass plate 13 with positioning marks 20 for the edges 4 of the plastic film and insert the plastic film 14 into a given position.

It is desirable to prepare two or more positioning marks. The position of the marks may be sides or corners.

Furthermore, as is seen from Fig. 6, if desired, mating the edges 4 of the plastic film with the edges 2 of the plastic film-inserted laminated glass at respective corner portions may be employed.

The number of the corner portions where the edges 4 of the plastic film and the edges 2 of the plastic film-inserted laminated glass are mated is preferably two or more.

### First Embodiment:

A plastic film-inserted laminated glass for use as an automotive front window glass was produced by the following steps.

In order to produce an outdoor side glass plate 10 and an indoor side glass plate 13, two glass plates were cut out, by a glass cutter, from a larger glass plate in such a manner that the two glass plates thus cut have predetermined shape and size matching with the size of a corresponding window, and then edge portions of the cut out glass plates were subjected to a polishing process. After cleaning and drying the two glass plates thus polished, the glass plate that is to be placed at an outdoor side was applied at a mating surface thereof (viz., the surface that is bonded by an interlayer) with a black ceramic paste through a screen printing and then dried.

The glass plate to which the ceramic paste was applied through the screen printing and the other glass plate were put on each other, and then these two glass plates were simultaneously heated in a bending furnace to produce curved glass plates which are used as an outdoor side glass plate 10 and an indoor side glass plate 13 respectively. Due to heating in the bending furnace, the ceramic paste applied to the glass plate through the screen printing was baked (or fired), so that a colored film 15 was formed on the outdoor side glass plate 10.

The width d2 of the colored film 15 was 30mm at the minimum portion and 100mm at the maximum portion.

A PET film of 100µm in thickness was prepared that is larger in size than the window and has both surfaces each being applied with an easy adhesive layer of Amorphous Polyester and a Silane coupling layer. From the PET film thus prepared, there was cut out a piece or plastic film 14 (or PET film piece) by using a NC cutter, which is similar in shape to a flat-shaped outdoor side glass plate 10 (viz., the glass plate cut out for producing the outdoor side glass plate 10) before the bending process and has a size smaller than the flat-shaped outdoor side glass plate 10 by 1cm or a size reduced by 1cm in a central direction.

At the time of cutting out the plastic film 14, a technique was used by which a cut surface of the film has an inclination angle of 30 degrees relative to the plastic film surface, not a right angle relative to the plastic film surface.

Two PVB films were prepared each having a thickness of 0.36mm. The above-mentioned plastic film 14 was sandwiched between these two PVB films.

Between the outdoor side glass plate 10 and the indoor side glass plate 13, there was inserted the two PVB films having the PET film put therebetween.

The insertion of the PVB film was so made that the edge 4 of the plastic film is placed away from the edge of the outdoor side glass plate 10 by 10mm.

After cutting the PVB film protruding from the mating edges of the outdoor side glass plate 10 and indoor side glass plate 13 that are put on each other, a space between the outdoor side glass plate 10 and indoor side glass plate 13 was subjected to a deaeration, and then a pressure and heat application process was carried out for producing the plastic film-inserted laminated glass 1.

The plastic film-inserted laminated glass thus produced did not show undesired wrinkles of the sandwiched PET film and prevented the edges 4 of the PET film from being viewed from the outside of the vehicle due to existence of the black colored film, and thus, the plastic film-inserted laminated glass thus produced was one suitably usable as a front window glass of a motor vehicle.

### Second Embodiment:

A PET film of 50µm in thickness was prepared that has one surface applied with an infrared reflecting film including a zinc oxide and silver which are laminated. From the PET film thus prepared, there was cut out a piece or plastic film 14 (or PET film piece) which is larger than the edge 3 of the colored film formed on the outdoor side glass plate 10 by 11mm (viz., d2 - d1 = 11mm) and similar to a shape of a transparent portion (viz., the transparent portion 5 of the plastic film-inserted laminated glass) of the outdoor side glass plate 10. Other production steps were identical to those of the above-mentioned first embodiment, and the plastic film-inserted laminated glass 1 of the second embodiment was thus produced.

The plastic film-inserted laminated glass thus produced had a heat shielding function that reflects near-infrared rays, did not show undesired wrinkles of the sandwiched PET film and prevented the edges 4 of the PET film from being viewed from the outside of the vehicle due to existence of the black colored film, and thus the plastic film-inserted laminated glass thus produced was one suitably usable as a front window glass of a motor vehicle.

### Third Embodiment:

A PET film of 188µm in thickness was prepared that has one surface applied with an infrared reflecting film including dielectric layers of silica and Titania. From the PET film thus prepared, there was cut out a piece or plastic film 14 (or PET film piece) which is larger than the edge 3 of the colored film formed on the outdoor side glass plate 10 by 5mm (viz., d2 - d1 = 5mm and similar to a shape of a transparent portion (viz., the transparent portion 5 of the plastic film-inserted laminated glass) of the outdoor side glass plate 10. Other production steps were identical to those of the above-mentioned first embodiment, and thus a plastic film-inserted laminated glass 1 of the third embodiment was produced.

The plastic film-inserted laminated glass thus produced had a heat shielding function that reflects near-infrared rays, did not shown undesired wrinkles of the sandwiched PET film and prevented the edges 4 of the PET film from being viewed from the outside of the vehicle due to existence of the black colored film, and thus the plastic film-inserted laminated glass thus produced was one suitably usable as a front window glass of a motor vehicle.

### First Comparative Example:

Glass plates, PVB film and PET film that are same as those used in the above-mentioned first embodiment were used. The PET film was sandwiched between two PVB films to form a sandwiched unit, and the sandwiched unit was sandwiched between two glass plates and the PET film protruding from the glass edges was cut out by a cutter. Other production steps were identical to those of the above-mentioned first embodiment, and a plastic film-inserted laminated glass of this first comparative example was produced.

The plastic film-inserted laminated glass thus produced showed around a peripheral portion thereof undesired wrinkles of the PET film, showed a difference in thickness between a peripheral portion and a central portion that might be caused by the wrinkles, which caused distortion in transparency, and thus, the plastic film-inserted laminated glass was one that was not suitably usable as a front window glass of a motor vehicle.

### Brief description of Drawings:

Fig. 1 is a schematic plan view of a plastic film-inserted laminated glass according to the present invention.
Fig. 2 is a sectional view taken along the line a - a' of Fig. 1.
Fig. 3 is a schematic sectional view of an edge portion of the plastic film-inserted laminated glass according to the present invention.
Fig. 4 is a schematic view of a cut surface of a plastic film.
Fig. 5 is a plan view of an indoor side glass plate that is provided with positioning marks for positioning the plastic film.
Fig. 6 is a plan view of a plastic film-inserted laminated glass in which edges of the plastic film and edges of the plastic film-inserted laminated glass are mated at corner portions.

### Explanation of References:

1... plastic film-inserted laminated glass
2...edge of plastic film-inserted laminated glass
3...edge of colored film
4...edge of plastic film
5...transparent portion of plastic film-inserted laminated glass
10...outdoor side glass plate
11, 12...interlayer
13...inside door glass plate
14...plastic film
15...colored film
20...positioning mark
21...given position of edge of the plastic film

## Claims

1. A plastic film-inserted laminated glass comprising an outdoor side glass plate, an interlayer, a plastic film, another interlayer and an indoor side glass plate which are laminated in this order, the glass plates having a curved shape formed by bending, the plastic film including an infrared reflecting film formed thereon and at least at one side of the laminated glass, an edge of the plastic film being placed apart from corresponding edges of the glass plates by a distance ranging from 5mm to 200m in a direction toward a central portion of the glass plates, **characterized in that** an angle of a cut surface provided at a peripheral edge of the plastic film relative to a surface of the plastic film is in the range from 30 degrees to 60 degrees.

2. A plastic film-inserted laminated glass as claimed in Claim 1, in which the plastic film has a thickness in the range from 50µm to 200µm.

3. A plastic film-inserted laminated glass as claimed in either one of Claims 1 and 2, in which the plastic film includes an infrared reflecting film constructed of dielectric multiple layers or metal layers.

4. A plastic film-inserted laminated glass as claimed in either one of Claims 1 to 3, in which the plastic film is cut out to have a shape similar to the shape of the plastic film-inserted laminated glass or the shape of a transparent portion of the plastic film-inserted laminated glass.

5. A plastic film-inserted laminated glass as claimed in either one of Claims 1 to 4, in which a colored film is formed along a peripheral portion of the outdoor side glass plate like a strip.

6. A plastic film-inserted laminated glass as claimed in either one of Claims 1 to 5, in which the indoor side glass plate is provided with positioning marks.

7. A plastic film-inserted laminated glass as claimed in either one of Claims 1 to 6, in which edges of the plastic film in the vicinity of corner portions of the glass plates are mated with edges of the glass plates.

## Patentansprüche

1. Laminiertes Glas mit eingebrachtem Kunststofffilm, umfassend eine außenseitige Glasplatte, eine Zwischenschicht, einen Kunststofffilm, eine weitere Zwischenschicht und eine innenseitige Glasplatte, welche in dieser Reihenfolge laminiert sind, wobei die Glasplatten eine gekrümmte, durch Biegen gebildete Form aufweisen, wobei der Kunststofffilm einen auf diesem und zumindest an einer Seite des laminierten Glases ausgebildeten infrarotreflektierenden Film aufweist, wobei eine Kante des Kunststofffilms von zugeordneten Kanten der Glasplatten um einen Abstand, der sich von 5 mm bis 200 mm in Richtung eines zentralen Bereichs der Glasplatten erstreckt, getrennt angeordnet ist, **dadurch gekennzeichnet, dass** der Winkel einer an einer Umfangskante des Kunststofffilms ausgebildeten Schnittfläche relativ zu einer Oberfläche des Kunststofffilms in einem Bereich von 30 Grad bis 60 Grad liegt.

2. Laminiertes Glas mit eingebrachtem Kunststofffilm nach Anspruch 1, bei welchem der Kunststofffilm eine Dicke im Bereich von 50 µm bis 200 µm aufweist.

3. Laminiertes Glas mit eingebrachtem Kunststofffilm nach einem der Ansprüche 1 und 2, bei welchem der Kunststofffilm einen infrarotreflektierenden Film, der aus dielektrischen Mehrfachschichten oder Metallschichten aufgebaut ist, enthält.

4. Laminiertes Glas mit eingebrachtem Kunststofffilm nach einem der Ansprüche 1 bis 3, bei welchem der Kunststofffilm zugeschnitten ist, so dass er eine Form ähnlich zu der Form des laminiertes Glases mit eingebrachtem Kunststofffilm oder der Form eines transparenten Bereichs des laminierten Glases mit eingebrachtem Kunststofffilm aufweist.

5. Laminiertes Glas mit eingebrachtem Kunststofffilm nach einem der Ansprüche 1 bis 4, bei welchem ein gefärbter Film entlang eines Umfangsbereichs der außenseitigen Glasplatte wie ein Streifen ausgebildet ist.

6. Laminiertes Glas mit eingebrachtem Kunststofffilm nach einem der Ansprüche 1 bis 5, bei welchem die innenseitige Glasplatte mit Positionsmarkierungen versehen ist.

7. Laminiertes Glas mit eingebrachtem Kunststofffilm nach einem der Ansprüche 1 bis 6, bei welchem Kanten des Kunststofffilms in der Nachbarschaft von Eckenbereichen der Glasplatten mit Kanten der Glasplatten ineinander greifen.

## Revendications

1. Verre stratifié avec film en matière plastique inséré, comprenant une plaque de verre côté extérieur, une couche intermédiaire, un film en matière plastique, une autre couche intermédiaire et une plaque de verre côté intérieur qui sont stratifiés dans cet ordre, les plaques de verre ayant une forme incurvée formée par cintrage, le film en matière plastique incluant un film réfléchissant les infrarouges formé sur lui-même et au moins sur un côté du verre stratifié, un bord du film en matière plastique étant placé en écartement des bords correspondants des plaques de verre sur une distance allant de 5 mm à 200 mm dans une direction vers une portion centrale des plaques de verre, **caractérisé en ce qu'**un angle d'une surface taillée prévue à un bord périphérique du film en matière plastique par rapport à une surface du film en matière plastique est dans la plage de 30° à 60°.

2. Verre stratifié avec film en matière plastique inséré selon la revendication 1, dans lequel le film en matière plastique a une épaisseur dans la plage de 50 µm à 200 µm.

3. Verre stratifié avec film en matière plastique inséré selon l'une ou l'autre des revendications 1 et 2, dans lequel le film en matière plastique inclut un film réfléchissant les infrarouges construit d'une multiplicité de couches diélectriques ou de couches en métal.

4. Verre stratifié avec film en matière plastique inséré selon l'une quelconque des revendications 1 à 3, dans lequel le film en matière plastique est taillé de manière à présenter une forme similaire à la forme du verre stratifié avec film en matière plastique inséré ou la forme d'une portion transparente du verre stratifié avec film en matière plastique inséré.

5. Verre stratifié avec film en matière plastique inséré selon l'une quelconque des revendications 1 à 4, dans lequel un film de couleur est formé le long d'une portion périphérique de la plaque de verre côté extérieur à la manière d'un ruban.

6. Verre stratifié avec film en matière plastique inséré selon l'une quelconque des revendications 1 à 5, dans lequel la plaque de verre côté intérieur est dotée de marques de positionnement.

7. Verre stratifié avec film en matière plastique inséré selon l'une quelconque des revendications 1 à 6, dans lequel des bords du film en matière plastique dans le voisinage de portions de coin des plaques de verre sont appariés avec des bords des plaques de verre.
